# FASCICULE DE BREVET EUROPEEN

(11) **EP 2 215 552 B1**
(45) Date de publication et mention de la délivrance du brevet: **18.04.2012**
(21) Numéro de dépôt: 08855711.1
(22) Date de dépôt: 05.11.2008
(51) Int. Cl.: G06F 13/38, H04L 29/06

(54) **CIRCUIT COMPORTANT UNE MACHINE MICROPROGRAMMEE POUR TRAITER LES ENTREES OU LES SORTIES D'UN PROCESSEUR AFIN DE LES FAIRE ENTRER OU SORTIR DU CIRCUIT SELON N'IMPORTE QUEL PROTOCOLE DE COMMUNICATION**
SCHALTUNG MIT MIKROPROGRAMMIERTER MASCHINE ZUR VERARBEITUNG DER EINGABEN ODER AUSGABEN EINES PROZESSORS FÜR IHREN EINGANG IN DIE ODER AUSGANG AUS DER SCHALTUNG GEMÄSS KOMMUNIKATIONSPROTOKOLL
CIRCUIT COMPRISING A MICROPROGRAMMED MACHINE FOR PROCESSING THE INPUTS OR THE OUTPUTS OF A PROCESSOR SO AS TO ENABLE THEM TO ENTER OR LEAVE THE CIRCUIT ACCORDING TO ANY COMMUNICATION PROTOCOL

(30) Priorité: 27.11.2007 FR 0708292
(43) Date de publication de la demande: 11.08.2010
(73) Titulaire: Commissariat à l'Énergie Atomique et aux Énergies Alternatives, 75015 Paris (FR)
(72) Inventeur: HARRAND, Michel, F-38120 Saint-Egreve (FR)
(74) Mandataire: Lucas, Laurent Jacques
(86) Numéro de dépôt international: PCT/EP2008/065019
(87) Numéro de publication internationale: WO 2009/068419

(56) Documents cités:
- US-A1- 2003 065 863
- FREESCALE SEMICONDUCTOR INC.: "MPC860 PowerQUICC Technical Summary"[Online] novembre 2001 (2001-11), pages 1-9, XP002486597 Extrait de l'Internet: URL:http://www.freescale.com/files/product /doc/MPC860TS.pdf?fpsp=1&WT_TYPE=Data%20Sh eets&WT_VENDOR=FREESCALE&WT_FILE_FORMAT=pd f&WT_ASSET=Documentation> [extrait le 2008-06-30] & FREESCALE SEMICONDUCTORS INC.: "MPC860 PowerQUICC Family User's Manual"[Online] juillet 2004 (2004-07), XP002486852 Extrait de l'Internet: URL:http://www.freescale.com/files/netcomm /doc/ref_manual/MPC860UM.pdf?fpsp=1&WT_TYP E=Reference%20Manuals&WT_VENDOR=FREESCALE& WT_FILE_FORMAT=pdf&WT_ASSET=Documentation> [extrait le 2008-06-30]
- KHAILANY B ET AL: "A Programmable 512 GOPS Stream Processor for Signal, Image, and Video Processing" SOLID-STATE CIRCUITS CONFERENCE, 2007. ISSCC 2007. DIGEST OF TECHNICAL PAPERS. IEEE INTERNATIONAL, IEEE, PI, 1 février 2007 (2007-02-01), pages 272-602, XP031111204 ISBN: 978-1-4244-0852-8 cité dans la demande

## Description

La présente invention concerne un circuit comportant au moins un processeur. Le circuit comporte une machine microprogrammée pour traiter les données qui entrent ou qui sortent du processeur afin de les faire entrer ou sortir du circuit en respectant un protocole de communication. Elle s'applique dans tous les domaines utilisant des microprocesseurs ou des circuits multiprocesseurs.

Des domaines professionnels comme la vidéo-surveillance, mais également des domaines grand-public comme celui des téléphones portables, mettent en oeuvre des circuits intégrés comportant un ou plusieurs microprocesseurs. Souvent, ces circuits visent des applications qui, quoique très spécifiques, peuvent utiliser de nombreuses interfaces d'entrée/sortie.

D'une part, ces circuits doivent souvent envoyer et recevoir des données dans des formats variés qui ne sont pas celui du ou des processeurs. Si chaque processeur gère ses propres entrées/sorties, cela lui prend l'intégralité de sa puissance de calcul. Il ne lui reste alors plus de temps pour faire ses traitements applicatifs. En fait, comme il s'agit de commander l'état logique des sorties à chaque cycle d'horloge, un processeur n'a même pas la puissance de calcul nécessaire pour gérer ses entrées/sorties. Il semble donc souhaitable que le circuit dispose de périphériques dédiés à la gestion des entrées et des sorties, afin de libérer les processeurs.

Mais d'autre part, ces circuits, lorsqu'ils sont à usage général et non dédiés à une application définie lors de leur conception, devront sans doute au cours de leur utilisation envoyer et recevoir des données selon des protocoles d'entrée/sortie qui ne sont pas encore connus à la fabrication du circuit ! Dans ce cas, la réalisation de périphériques de gestion des entrées/sorties est problématique.

Une solution actuelle mise en oeuvre sur des circuits microprocesseurs ou multiprocesseurs à usage général consiste à implémenter un grand nombre de périphériques dédiés de gestion des entrées/sorties visant des protocoles d'entrée/sortie variés. Il s'agit de couvrir le plus largement possible, qualitativement et quantitativement, la gamme des interfaces d'entrée/sortie susceptibles d'être utilisées. Un exemple d'un tel circuit selon l'art antérieur peut être trouvé dans un article présenté à la conférence ISSCC de février 2007 par B. Khailany et al sous le numéro 15.2. L'article est intitulé « A Programmable 512GOPS Stream Processor for Signal, Image and Video Processing ». Ce circuit comporte de nombreux périphériques de gestion des entrées/sorties définitivement câblés. Ainsi, le circuit sera définitivement inadapté à une application utilisant une interface nouvelle, pour laquelle aucun périphérique dédié n'a été câblé à la fabrication. De plus, une application peut nécessiter d'utiliser un type donné d'interface plus de fois qu'il n'existe de périphérique dédié à ce type d'interface. Le circuit est alors définitivement inadapté à une telle application. Sans oublier que, dans la pratique, la plupart des périphériques de gestion des entrées/sorties sur un tel circuit restent inutilisés. Car une application donnée n'utilise qu'un nombre restreint d'interfaces parmi tous les types d'interfaces connus à la fabrication du circuit. Par conséquent, le circuit présente souvent un encombrement important pour rien, la majeure partie de sa surface supportant des périphériques inutilisés.

Pour tenter de pallier ces inconvénients, des processeurs actuels utilisent des registres standards appelés « GPIO » selon l'acronyme anglo-saxon signifiant « General Purpose Inputs / Outputs ». La direction d'utilisation, que ce soit en entrée, en sortie ou en haute impédance, est commandée par un registre qui peut être chargé par le processeur. La valeur des sorties est programmée par un autre registre également chargé par le processeur. La valeur des entrées peut être lue par le processeur. Ainsi, les entrées/sorties par un registre GPIO sont gérées par le processeur lui-même. Cette solution n'est donc applicable qu'à des interfaces suffisamment lentes pour que le processeur puisse les commander tout en gardant suffisamment de temps pour ses tâches applicatives.

Une autre solution actuelle est divulguée dans le brevet américain US 6,931,466. Une partie du protocole bas niveau est gérée par un processeur de traitement, puisque certaines broches peuvent être programmées en GPIO et donc commandées directement par le processeur de traitement. Une partie intermédiaire du protocole est gérée par une machine DMA dédiée (acronyme anglais de « Direct Memory Access »), la machine DMA étant située en dehors des périphériques d'entrée/sortie. La partie basse du protocole est gérée par une machine d'état de type « Pin State Machine » d'après la dénomination anglaise, elle même composée d'un registre d'état et d'un PLA (acronyme anglais de « Programmable Logic Array »). Un inconvénient majeur de cette solution, c'est qu'un PLA est programmé par masquage. Ainsi, même s'il est possible de changer le protocole en ne changeant qu'un seul masque de fabrication et non le jeu complet, il faut noter qu'une fois le circuit réalisé, il n'est plus possible de changer le programme ! Cette solution manque donc de souplesse et ne permet d'adresser que des protocoles assez simple. En tous cas, elle ne permet pas de libérer complètement les processeurs de traitement.

La présente invention a notamment pour but de réaliser des périphériques d'entrée/sortie programmables permettant d'adapter le circuit qui les accueille à tous les nouveaux protocoles d'entrée/sortie. Ainsi, le ou les processeurs du circuit sont définitivement soulagés de la gestion des entrées/sortie et peuvent se consacrer pleinement à leurs tâches applicatives. Pour cela, les entrées/sorties sont vues par le programme du ou des processeurs comme des mémoires. Les processeurs écrivent leurs données de sortie dans une zone mémoire correspondant au périphérique désiré et signalent la disponibilité d'une certaine quantité de données au périphérique par un message. Le périphérique selon l'invention transmet les données de cette zone mémoire vers les broches de connexion du circuit, suivant le protocole pour lequel il est spécifiquement programmé. En sens inverse, le périphérique selon l'invention échantillonne les données reçues sur les broches suivant le protocole pour lequel le périphérique est programmé. Il les range dans sa zone mémoire et signale aux processeurs l'arrivée d'une certaine quantité de données par un message ou une interruption. Le processeur vient alors lire quand il le souhaite ces données dans la zone mémoire correspondante. A cet effet, l'invention a pour objet un circuit comportant au moins un processeur ainsi qu'une machine microprogrammée pour traiter des données qui entrent ou qui sortent du processeur, afin de les faire entrer ou sortir du circuit par des broches de connexion en respectant un protocole de communication. Chaque broche permet l'entrée ou la sortie d'un bit d'information. La machine microprogrammée détermine, à chacun de ses cycles d'horloge et en une seule instruction, quelles broches sont en mode entrée et quelles broches sont en mode sortie, quelle valeur affecter à chaque broche, quelles valeurs transmettre au processeur ou encore quels signaux attendre avant de continuer l'envoi ou la réception de données.

Dans un mode de réalisation préférentiel, une instruction de la machine microprogrammée peut comporter un champ permettant de déterminer quelles broches sont en mode entrée et quelles broches sont en mode sortie, au moins un champ permettant de déterminer quelle valeur affecter à chaque broche en mode sortie, un champ permettant de déterminer quelles valeurs transmettre au processeur ou encore un champ permettant de déterminer quels signaux attendre avant de continuer l'envoi ou la réception de données. Ainsi, le mode entrée/sortie de chaque broche, la valeur à affecter à chaque broche, les valeurs à transmettre au processeur ainsi que les signaux à attendre peuvent être déterminés en un cycle d'horloge.

Dans un mode de réalisation préférentiel, la machine microprogrammée peut comporter un registre d'instruction et une mémoire de microprogramme contenant des instructions formant un microprogrammme, le registre pouvant être chargé avec des instructions du microprogramme et les instructions permettant de traiter les données qui entrent ou qui sortent du processeur afin de les faire entrer ou sortir du circuit en respectant le protocole de communication. Avantageusement, les instructions peuvent être modifiées dans la mémoire de microprogramme, de sorte que le circuit peut être adapté à n'importe quel protocole de communication.

Par exemple, chaque instruction peut comporter au moins un champ permettant de déduire l'adresse de l'instruction suivante à exécuter dans la mémoire de microprogramme.

Dans un mode de réalisation, le circuit peut comporter un module d'interface réseau entre la machine microprogrammée et un réseau de communication utilisé par le processeur. Le processeur et la machine microprogrammée peuvent échanger les données par écriture puis lecture dans une mémoire, la mémoire ne contenant que temporairement les données.

Par exemple, un jeu donné de broches adjacentes peut alors former un port d'entrée/sortie utilisable par la machine microprogrammée pour faire entrer dans le circuit les données à destination du processeur ou pour faire sortir du circuit les données en provenance du processeur, en respectant le protocole de communication.

Dans un mode de réalisation, chaque broche de connexion peut être connectée à un amplificateur permettant d'émettre ou de recevoir un signal sur la broche. Le circuit peut alors comporter un module d'interface broches entre la mémoire et les amplificateurs, les instructions formant le microprogramme contrôlant le transfert des données entre la mémoire et les amplificateurs à travers le module d'interface broches.

Dans un mode de réalisation préférentiel, le circuit peut comporter un module permettant de convertir des mots au format de la mémoire en des mots à un format adapté au nombre de broches disponibles pour faire entrer ou sortir les données du circuit en respectant le protocole de communication, ce dernier format étant avantageusement déterminé par les instructions formant le microprogramme. Des données parallèles sur 32 bits peuvent être converties en des données parallèles sur 16, 8, 4 ou 2 bits et inversement. Des données parallèles sur 32 bits peuvent être converties en des données série et inversement.

Avantageusement, le circuit peut comporter au moins deux machines microprogrammées pour traiter des données qui entrent ou qui sortent du processeur afin de les faire entrer ou sortir du circuit en respectant des protocoles de communication. Deux jeux adjacents de broches étant respectivement utilisables par deux machines, le circuit peut comporter un module de décalage permettant qu'une première machine utilise, en plus de son propre jeu de broches, des broches dans le jeu adjacent de la deuxième machine, les instructions formant le microprogramme permettant de contrôler le module de décalage. Le circuit peut également comporter un module de décalage permettant que la deuxième machine utilise à son tour des broches dans un jeu adjacent de broches d'une troisième machine microprogrammée. Deux espaces dans la mémoire étant respectivement utilisables par deux machines utilisant des ports adjacents, les deux espaces étant divisés en plusieurs tampons de mémoire, une première machine peut utiliser, en plus de ses propres tampons de mémoire et proportionnellement au volume de données qu'elle traite, des tampons de mémoire de la deuxième machine. La deuxième machine peut également utiliser à son tour, proportionnellement au volume de données qu'elle traite, des tampons de mémoire d'une troisième machine microprogrammée utilisant un port adjacent au sien.

La machine microprogrammée comportant une horloge pour cadencer ses cycles de traitement, l'horloge peut fournir une fréquence de travail provenant d'un périphérique externe. L'horloge peut également fournir une fréquence de travail obtenue par multiplication ou division de la fréquence de travail du processeur. Les instructions formant le microprogramme peuvent permettre de sélectionner une fréquence de travail fournie par un périphérique externe ou une fréquence de travail obtenue par multiplication ou division de la fréquence de travail du processeur par un coefficient ajustable.

Le circuit peut comporter un module de reconnaissance des données de contrôle du protocole de communication, les données de contrôle à reconnaître étant fournies par la machine microprogrammée.

La machine microprogrammée peut comporter un module de comptage de boucles.

L'invention a encore pour principaux avantages qu'elle permet d'optimiser l'utilisation des ressources du circuit en mémoire et en broches de connexion. En effet, les périphériques selon l'invention peuvent partager entre eux les ressources en mémoire et en broches. Si plusieurs périphériques d'entrée/sortie sont nécessaires pour communiquer simultanément avec plusieurs autres circuits, il se peut que les besoins en espace mémoire et en nombre de broches soient différents. Il est alors intéressant de pouvoir distribuer au mieux ces ressources entre les périphériques, de manière à limiter sur le circuit le nombre total de broches de connexion et la taille de la mémoire.

D'autres caractéristiques et avantages de l'invention apparaîtront à l'aide de la description qui suit faite en regard de dessins annexés qui représentent :
- la figure 1, par un synoptique, une illustration d'un circuit multiprocesseur selon l'art antérieur ;
- la figure 2, par un synoptique, une illustration d'un exemple simplifié d'architecture d'un circuit selon l'invention ;
- la figure 3, par un synoptique, une illustration d'un exemple de mise en oeuvre d'un module d'interface broches selon l'invention ;
- la figure 4, par un synoptique, une illustration d'un exemple d'interconnexion sur un même circuit de deux périphériques d'entrée/sortie selon l'invention ;
- les figures 5 et 6, par des synoptiques, des illustrations d'exemples de mise en oeuvre d'une mémoire selon l'invention ;
- la figure 7, par un synoptique, une illustration d'un exemple de mise en oeuvre d'un contrôleur selon l'invention ;
- la figure 8, par un synoptique, une illustration d'un exemple d'architecture permettant de mettre en oeuvre un module d'interface mémoire selon l'invention.

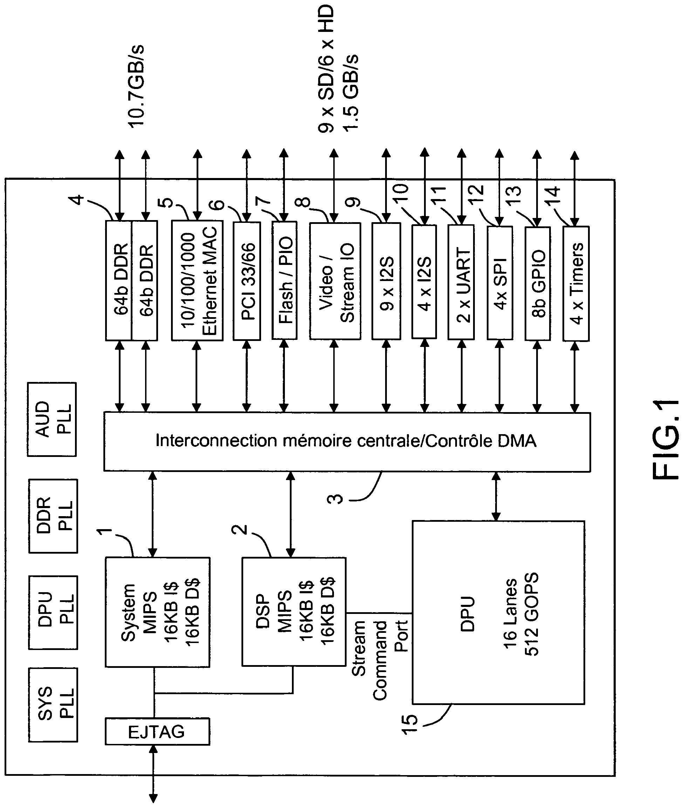

La figure 1 illustre par un synoptique un circuit multiprocesseur selon l'art antérieur. Il s'agit du circuit décrit par le papier 15.2 de la conférence ISSCC2007 cité précédemment. Le circuit de la figure 1 comporte notamment trois processeurs 1, 2 et 15, ainsi qu'un bus de données 3. Il comporte également onze périphériques câblés de gestion des entrées/sorties, à savoir les périphériques 4, 5, 6, 7, 8, 9, 10, 11, 12, 13 et 14. Le périphérique 4 est capable de gérer simultanément deux interfaces « DDR SDRAM ». Le périphérique 5 est capable de gérer une interface « Ethernet ». Le périphérique 6 est capable de gérer une interface « PCI ». Le périphérique 7 est capable de gérer une interface « Flash/PIO ». Le périphérique 8 est capable de gérer une interface « Video ». Le périphérique 9 est capable de gérer simultanément trois interfaces « 12S ». Le périphérique 10 est capable de gérer simultanément quatre interfaces « 12C ». Le périphérique 11 est capable de gérer simultanément deux interfaces « UART ». Le périphérique 12 est capable de gérer simultanément quatre interfaces « SPI ». Le périphérique 13 est capable de gérer une interface « GPIO ». Le périphérique 14 est capable de gérer simultanément quatre interfaces « Timer ». Le circuit de la figure 1 illustre bien les inconvénients des circuits selon l'art antérieur qui implémentent un grand nombre de périphériques dédiés à la gestion des entrées/sorties, ceci pour couvrir le plus largement possible la gamme des interfaces susceptibles d'être utilisées. En effet, les périphériques 4 à 14 étant définitivement câblés, le circuit de la figure 1 sera définitivement inadapté à une application utilisant une interface nouvelle pour laquelle aucun périphérique n'a été câblé. Par exemple, le circuit de la figure 1 est inadapté à une application utilisant une interface USB. Le circuit de la figure 1 est également inadapté à une application nécessitant d'utiliser simultanément trois interfaces « DDR SDRAM ». Enfin, le circuit de la figure 1 présente un encombrement important à cause des onze périphériques 4 à 14, alors que la plupart de ces périphériques restent inutilisés dans la majeure partie des applications du circuit. En effet, il est fort peu probable qu'une application utilise simultanément 24 interfaces d'entrée/sortie !

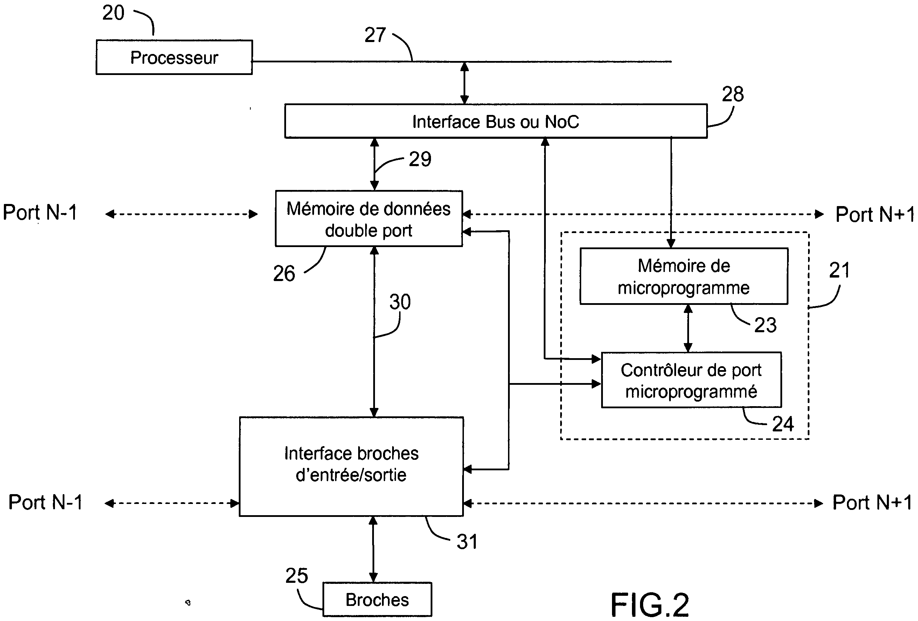

La figure 2 illustre par un synoptique un exemple simplifié d'architecture d'un circuit selon l'invention. Dans cet exemple, un unique processeur 20 utilise une seule interface pour ses entrées/sorties de données. Une machine microprogrammée 21 selon l'invention permet de gérer cette interface d'entrée/sortie. La machine microprogrammée 21 peut comporter par exemple une mémoire 23 de microprogramme et un contrôleur de port microprogrammé 24. C'est le microprogramme contenu dans la mémoire 23 qui implémente la gestion du protocole de communication correspondant à l'interface d'entrée/sortie. Ainsi, il apparaît que la seule limitation de la présente invention est quantitative : elle tient au nombre de machines microprogrammables utilisées. En effet, un circuit mettant en oeuvre la présente invention ne pourra utiliser simultanément plus d'interfaces d'entrée/sortie qu'il ne dispose de machines microprogrammées comme la machine 21. Dans la pratique, la limitation tient à l'espace disponible sur le circuit pour implanter les machines microprogrammables comme la machine 21, mais elle peut également tenir à l'espace disponible pour implanter des broches 25 de connexion. Les broches 25 permettent d'envoyer et de recevoir physiquement les signaux véhiculant les données. Chaque broche permet de transporter un bit d'information à la fois. Par contre, la présente invention ne présente aucune limitation qualitative : tout type d'interface, même nouveau et/ou inconnu à la fabrication de la carte, peut être implémenté par microprogrammation de la machine 21.

Avantageusement, l'invention propose par exemple d'utiliser une mémoire 26 pour assurer les échanges entre le processeur 20 et la machine 21. En sortie, le processeur 20 peut écrire temporairement ses données dans la mémoire 26 par l'intermédiaire d'un bus de données ou d'un réseau de distribution de données (« Network on Chip » ou NoC en anglais) 27 et d'une interface 28 avec ce bus ou ce NoC par exemple. La machine 21 transfère les données de la mémoire 26 vers les broches 25 de sortie du circuit. En entrée, la machine 21 transfère temporairement les données reçues sur les broches 25 d'entrée du circuit dans la mémoire 26 et le processeur 20 lit les données dans la mémoire 26 par l'intermédiaire du bus de données 27 et de l'interface 28. Ainsi, d'un point de vue purement logique, le processeur 20 voit les entrées/sorties comme des espaces mémoires dans lesquels il lit et écrit à son propre format et à sa propre cadence. Parallèlement, la machine 21 transfère les données vers et depuis ces mêmes espaces mémoires. Mais seule la machine 21 prend en charge les tâches de conversion de format des données. En entrée, elle retire par exemple les données de contrôle afin de ne transférer vers la mémoire 26 que des données utiles et de ne pas polluer le processeur 20 qui ne saurait pas traiter les données de contrôle. En sortie, elle ajoute par exemple des données de contrôle aux données utiles qu'elle a transféré depuis la mémoire 26. Toutes ces opérations d'écriture et de lecture dans la mémoire 26 par la machine 21 se font à la cadence de l'interface d'entrée/sortie, indépendamment de la cadence de travail du processeur 20.

Dans le mode de réalisation simplifié de la figure 2, le processeur 20 communique uniquement avec la machine 21. Mais l'invention pourrait également fonctionner si le processeur 20 communiquait simultanément avec d'autres processeurs ou d'autres machines microprogrammées, à travers le bus ou NoC 27 par exemple. De même, la machine 21 pourrait être partagée dans le temps entre plusieurs processeurs par l'intermédiaire du bus ou NoC 27. Fonctionnellement d'après la figure 2, la mémoire 26 permettant l'échange de données entre le processeur 20 et la machine 21 est à double port : un port 29 contrôlé par le processeur 20 et un port 30 contrôlé par la machine 21. Avantageusement, la mémoire 26 peut être physiquement à double port. Mais la mémoire 26 peut également être une mémoire à simple port où le port est partagé dans le temps entre le processeur 20 et la machine 21. La mémoire 26 peut aussi être composée de deux mémoires fonctionnant en ping-pong. En mode sortie (respectivement en mode entrée), le processeur 20 écrit (respectivement lit) dans une première mémoire pendant que la machine 21 lit (respectivement écrit) dans la deuxième mémoire. Puis, le processeur 20 écrit (respectivement lit) dans la deuxième mémoire pendant que la machine 21 lit (respectivement écrit) dans la première. Cependant, même si cette dernière possibilité limite la surface occupée par la mémoire 26, elle complexifie l'interface entre la machine 21 et le processeur 20. En effet, la machine 21 est cadencée par une horloge dont la fréquence correspond au débit des entrées/sorties correspondant à l'interface d'entrée/sortie. Cette cadence est indépendante de celle du processeur 20. L'interface entre le domaine d'horloge du processeur 20 et le domaine d'horloge de la machine 21 est considérablement simplifiée par l'utilisation de deux ports indépendants pour accéder à la mémoire 26.

Comme illustré par la figure 2, l'interface 28 commande le port 29. Les signaux de donnée du port 30 peuvent quant à eux être reliés à un module 31 d'interface broches par exemple. Le module 31 permet la sortie des données vers les broches 25 ou inversement le transfert des données présentes sur les broches 25 vers la mémoire 26. Le port 30 est contrôlé par le contrôleur microprogrammé 24 selon l'invention, dont le rôle est d'assurer que les échanges de données se font en suivant le protocole de communication correspondant à l'interface d'entrée/sortie. C'est le microprogramme du contrôleur 24, contenu dans la mémoire 23 de microprogramme, qui détermine le protocole de communication implémenté par la machine 21. Ce microprogramme peut être chargé depuis l'interface 28 à l'initialisation du système. Le contrôleur microprogrammé 24 commande en outre la configuration et le fonctionnement du module 31 d'interface broches. Dans le cas où le protocole de communication correspondant à l'interface est complexe, la machine 21 ne gèrera que les couches basses du protocole, comme la transmission des données dans les deux sens, la synchronisation, et éventuellement la correction d'erreur. Les couches hautes, comme l'établissement d'une session et l'interprétation des données, seront prises en charge par le processeur 20.

Le circuit illustré par la figure 2, à l'exception du processeur 20 et du bus 27, pour gérer selon l'invention une interface d'entrée/sortie constitue un périphérique d'entrée/sortie. Par la suite, cet ensemble sera simplement appelé « périphérique d'entrée/sortie ».

Par ailleurs, tous les périphériques d'entrée/sortie n'ont pas besoin du même nombre de broches. Certaines interfaces série n'utilisent que 3 broches, alors que d'autres interfaces peuvent en nécessiter une soixantaine. Comme illustré par la figure 2, plutôt que de dimensionner chaque port avec le nombre maximum de broches, la présente invention propose qu'un port d'entrée/sortie puisse être configuré pour utiliser tout ou partie des broches des ports qui lui sont physiquement adjacents. Ainsi, si le périphérique d'entrée/sortie selon l'invention illustré par la figure 2 utilise des broches formant un port N, alors il est aussi capable d'utiliser des broches du port N-1 ou du port N+1, les ports N-1 et N+1 étant utilisés par d'autres périphériques d'entrée/sortie selon l'invention. Mais ce mécanisme sera détaillé par la suite.

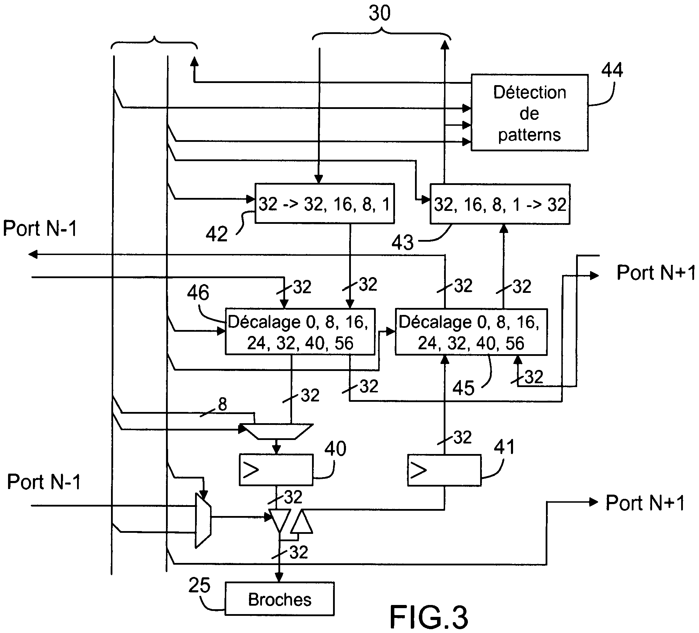

La figure 3 illustre un exemple de mise en oeuvre du module 31 d'interface broches, qui permet le transfert des données entre la mémoire 26 et les broches 25 par l'intermédiaire du port 30. Les broches 25 sont commandées par un registre de sortie 40 et un registre d'entrée 41. Par exemple, sur un front d'horloge du périphérique d'entrée/sortie, des données de sortie sont enregistrées dans le registre de sortie 40 qui comporte 32 bits. Une partie des données peut provenir de la mémoire de données 26 et une autre partie peut provenir du contrôleur 24. Ceci peut être programmé octet par octet. Lorsque les données proviennent du contrôleur 24, elles sont chargées octet par octet. Lorsqu'elles proviennent de la mémoire 26, plusieurs formats sont possibles. Suivant le protocole de communication implémenté par le périphérique d'entrée/sortie, le nombre de bits des mots échangés peut être très variable. Très probablement, il est différent du format des mots du processeur 20. Cependant, les formats les plus courants sont 1 bit pour les entrées/sorties en série et 8 bits, 16 bits, 32 bits ou 64 bits pour les entrées/sorties en parallèle. Dans le présent exemple, le bus 27 utilise des mots de 32 bits. La mémoire 26 stocke donc des mots de 32 bits qui peuvent être reçus ou envoyés directement sur l'interface 28. Par conséquent, il convient d'opérer une conversion de format entre la mémoire 26 et le registre 40. Dans le présent exemple d'implémentation, le registre 40 peut être chargé en un seul cycle d'horloge dans le cas où le format des données de sortie est inférieur à 32 bits. Lorsque le format de données de sortie est compris entre 32 et 64 bits, des registres identiques au registre 40 ainsi que des broches de périphériques adjacents sont utilisés. Deux cycles d'horloge alors sont nécessaires pour transférer les données depuis la mémoire 26 . Avantageusement, un module 42 de conversion de format des données de sortie peut être constitué de plusieurs multiplexeurs. Un premier multiplexeur de 32 bits à 1 bit peut être utilisé pour les sorties en série. Il permet d'aiguiller successivement tous les bits d'un même mot venant de la mémoire 26 vers la même broche. Il est à noter qu'afin de ne pas compliquer exagérément le module 42 de conversion de format, une seule des broches commandées par un port d'entrée/sortie peut recevoir de telles données série. Un deuxième multiplexeur de 32 bits à 8 bits peut être utilisé pour les sorties 8 bits en parallèle. De même que précédemment, seules les 8 premières broches de chaque port peuvent recevoir les entrées/sorties par octet. Un troisième multiplexeur de 32 bits à 16 bits et un quatrième multiplexeur de 32 bits à 32 bits peuvent être utilisés de manière tout à fait similaire pour les sorties 16 bits et 32 bits respectivement. Concernant les formats de plus de 32 bits, les broches du port d'entrée/sortie adjacent sont utilisées, comme ce sera expliqué par la suite. Bien-sûr, ces formats nécessitent deux cycles d'horloge pour chaque lecture/écriture dans la mémoire 26. Cela peut également être le cas pour deux mots consécutifs venant de la mémoire 26. Les formats intermédiaires entre deux des formats prévus utilisent le format immédiatement supérieur. Par exemple, pour des données de 10 bits le format 16 bits est utilisé avec 6 broches restant inutilisées. Le format utilisé est déterminé grâce à des registres de configuration chargés dans le contrôleur 24, qui sera décrit en détail par la suite.

En entrée, les données peuvent être traitées de manière très similaire par le registre d'entrée 41 et un module 43 de conversion de format des données d'entrée. Suivant l'état des registres de configuration chargés dans le contrôleur 24, le module 43 peut par exemple permettre de convertir en mots de 32 bits des entrées série, des entrées 2 bits, des entrées 4 bits, des entrées par octet, des entrées par mots de 16 bits ou même de traiter directement des entrées par mots de 32 bits. Les données converties en mots de 32 bits sont alors stockées dans la mémoire 26 organisée en mots de 32 bits. Lorsque le format choisi est de plus de 32 bits, le chargement se fait en 2 cycles. Optionnellement, le module 43 peut comprendre une unité de correction d'erreurs programmable afin de corriger les erreurs de transmission. Ceci est supporté par un certain nombre de protocoles de communication, comme le standard USB par exemple.

Sur chaque broche de connexion parmi les broches 25 peut par exemple être connecté un amplificateur ou « driver » selon la terminologie anglo-saxonne. Les drivers sont bidirectionnels. Comme dans les GPIO de certains microprocesseurs et comme détaillé par la suite, les drivers sont commandés par des signaux de contrôle à travers des registres par le contrôleur 24. En ce qui concerne les sorties, le registre 40 contient 1 bit par broche indiquant la valeur 0 ou 1 à sortir sur la broche. Un autre registre, situé dans le contrôleur 24, indique si les drivers de sortie sont en haute impédance ou non. Afin de simplifier la commande des drivers, il est ici proposé de commander les sorties par groupes de 8 bits. Un certain nombre de groupes de 8 bits sont configurés en entrée, les autres sont configurés en sortie. Toutefois, optionnellement, pour garder un peu de souplesse, l'un des groupes peut être configuré en entrée ou en sortie indépendamment bit par bit. Pour implémenter cette fonctionnalité, le registre indiquant les sorties en haute impédance est organisé en 2 parties. Une partie contient 1 bit haute impédance par octet. Une autre partie contient 1 bit haute impédance par bit pour 8 bits. Un registre de configuration indique quel est l'octet qui est commandé bit par bit. Les données présentes sur les entrées sont échantillonnées par un troisième registre, le registre 41. Alternativement, les bits du premier registre peuvent être réutilisés pour cet usage au moyen d'un multiplexage approprié.

Dans certains standards de communication, il peut être nécessaire de reconnaître certaines structures de données de contrôle ou « patterns » selon l'expression anglo-saxonne. Ce sont des blocs de données spécifiques indiquant par exemple le début ou la fin d'un bloc de données et/ou permettant la synchronisation entre émetteur et récepteur. Avantageusement, un module 44 de détection de patterns peut permettre la comparaison entre les sorties de la conversion de format et un ou plusieurs patterns fournis par le contrôleur 24, qui peut en outre indiquer les bits ou octets dont la valeur ne doit pas être prise en compte pour la comparaison. Les résultats de la comparaison sont alors fournis en retour au contrôleur 24.

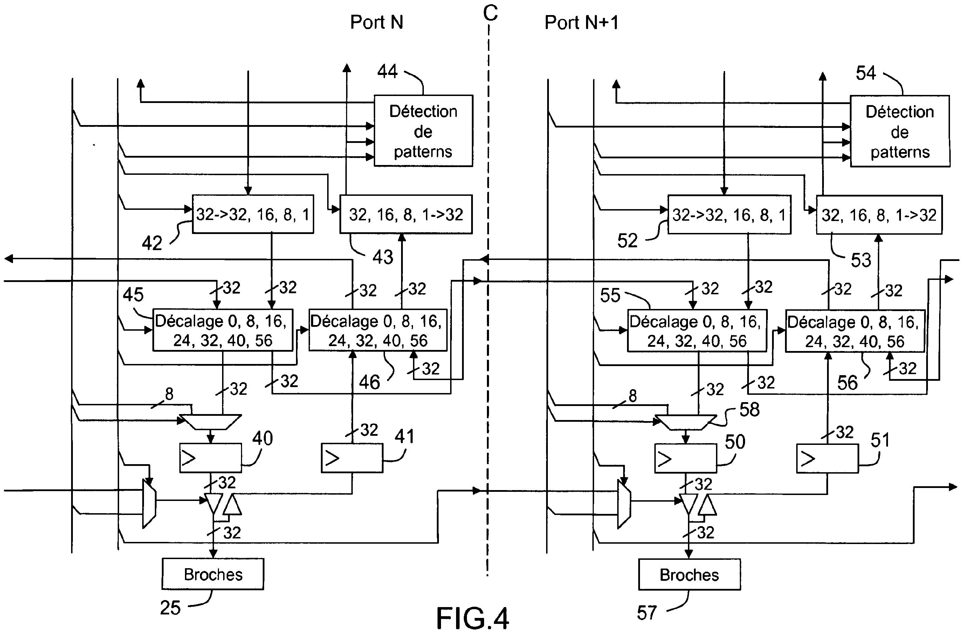

Enfin, des modules 45 et 46 de décalage peuvent avantageusement permettre d'interconnecter le périphérique d'entrée/sortie selon l'invention illustré par la figure 2 avec des périphériques d'entrée/sortie voisins. Comme déjà énoncé précédemment, ceci permet que le port N puisse être configuré pour utiliser tout ou partie des broches du port N+1 qui lui est adjacent. Ce mécanisme est illustré en détails par la figure 4.

La figure 4 illustre un exemple d'interconnexion de deux périphériques d'entrée/sortie selon l'invention sur un même circuit, grâce à des modules de décalage comme les modules 45 et 46. En effet, tous les périphériques d'entrée/sortie n'ont pas besoin du même nombre de broches. Certaines interfaces série n'utilisent que 3 broches : une pour les données d'entrée, une pour les données de sortie et une pour l'horloge. D'autres interfaces peuvent en nécessiter une soixantaine. Chaque port pourrait être dimensionné avec le nombre maximum de broches pour les interfaces envisagées. Mais cela conduirait à un nombre très important de broches sur la périphérie du circuit alors que beaucoup d'entre elles ne seraient pas utilisées. Or, une broche de connexion prend une surface de silicium importante. Il convient donc d'optimiser le nombre total de broches. La solution proposée par l'invention est qu'un port N d'entrée/sortie puisse être configuré pour utiliser tout ou partie des broches du port N+1 immédiatement à sa droite ou du port N-1 immédiatement à sa gauche, en plus de la totalité ou d'une partie de ses propres broches.

Dans l'exemple de la figure 4, le port N peut par exemple être configuré pour utiliser des broches du port N+1 immédiatement à sa droite. Une droite verticale C sépare la figure 4 en deux moitiés. A gauche de la droite C sont illustrés les mêmes éléments que ceux de la figure 3, à savoir l'exemple de mise en oeuvre du module 31 d'interface broches commandant le port N formé par les broches 25. A droite de la droite C est illustré un autre module d'interface broche, celui d'un autre périphérique d'entrée/sortie dont des broches 57 sont situées physiquement à droite des broches 25 formant le port N. Les broches 57 forment le port N+1. De manière tout à fait similaire, cet autre module d'interface broche peut comporter un registre de sortie 50 et un registre d'entrée 51, un module 52 de conversion de format des données de sortie, un module 53 de conversion de format des données d'entrée, un module 54 de détection de patterns, des modules 55 et 56 de décalage.

Par exemple, le module de décalage 55 reçoit en entrée un bus de 64 bits. Ce bus d'entrée est formé de la concaténation du bus de données 32 bits venant de la conversion de format du module 52 de son propre port N+1 pour les poids faibles et du bus de donnée 32 bits venant du port N de gauche pour les poids forts. Le module 55 fournit une sortie décalée d'un nombre programmable de bits, par exemple 0, 8, 16, 24, 32, 40 ou 56 bits, sur un bus de sortie de 64 bits. Ce bus de sortie est connecté aux registres 50 de commande des broches 57 de son propre port N+1 pour les 32 bits de poids fort et il est connecté aux registres de commande des broches du port N+2 situé à sa droite pour les 32 bits de poids faible. Le port N+2 n'est pas illustré sur la figure 4. Il présente la même architecture que les ports N et N+1. Dans le cas d'un format de données de plus de 32 bits, le transfert de données se fait en deux fois. Lors du transfert des bits de poids faibles, le module de décalage 55 est programmé pour décaler de 32 bits de plus que pour le transfert des bits de poids forts. Le nombre de bits de décalage est programmé par un registre de configuration chargé dans le contrôleur 24. Dans le présent exemple de réalisation, afin de simplifier le module de décalage 55, il est proposé de le limiter à des décalages de 0, 8, 16, 32, 40, 48 ou 56 bits. En effet, ceci limite sa complexité à 64 multiplexeurs 8 vers 1 au lieu de 64 multiplexeurs 64 vers 1, ou plutôt à deux modules de décalage 55 et 56 comprenant chacun 64 multiplexeurs 8 vers 1. Les contraintes induites sont d'une part que le nombre d'entrées et le nombre de sorties doivent être des multiples de 8, et d'autre part que le multiplexeur 32 vers 1 du module de conversion de format 52 utilisé pour les sorties et le démultiplexeur 1 vers 32 du module de conversion de format 53 utilisé pour les entrées ne soient pas connectés au même bit du premier octet. Par exemple, le premier bit peut être utilisé pour les sorties et le dernier bit peut être utilisé pour les entrées. Ainsi, une interface série pourra immobiliser seulement huit broches commandées par le registre où les états haute-impédance sont programmables bit par bit : le premier bit pour la sortie série, le dernier bit pour l'entrée série. Les autres bits peuvent être utilisés pour d'éventuels signaux de validation.

Bien-sûr, un même circuit peut comporter bien plus que deux périphériques interconnectés selon l'invention, de sorte à pouvoir utiliser simultanément un grand nombre d'interfaces d'entrée/sortie.

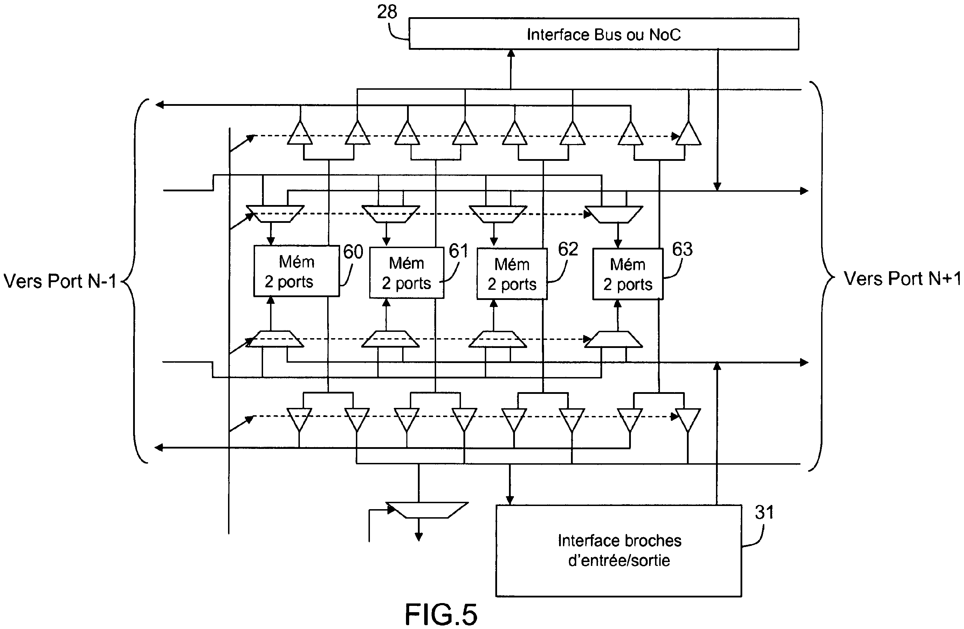

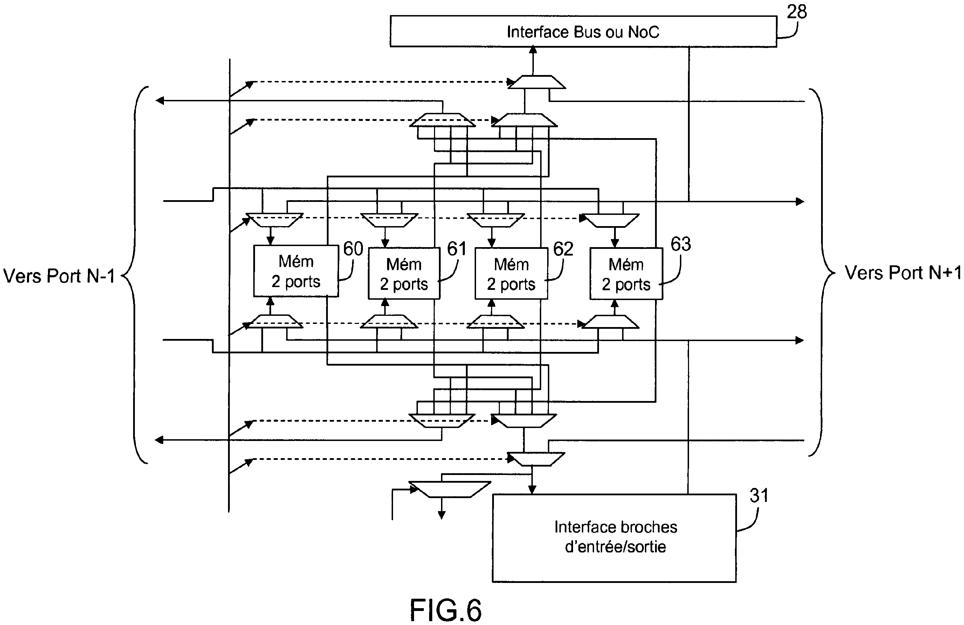

Les figures 5 et 6 illustrent des exemples avantageux de mise en oeuvre de la mémoire 26. En effet, tous les ports d'entrée/sortie n'ont pas besoin de la même quantité de mémoire. Typiquement, un port série a un débit 32 fois plus faible qu'un port 32 bits, par conséquent il nécessite un espace mémoire 32 fois plus petit. De manière similaire au partage des broches, afin d'optimiser l'utilisation des ressources en mémoire et par conséquent la surface de silicium, il peut être intéressant de partager la mémoire 26 entre les ports d'entrée/sortie. Une solution peut avantageusement être de diviser en plusieurs tampons la mémoire de chaque port, par exemple en divisant la mémoire 26 du port N en quatre tampons 60, 61, 62 et 63. De cette manière, un nombre variable de 1 à 7 tampons peuvent être alloués au port N, celui-ci pouvant utiliser tout ou partie des tampons du port N+1 immédiatement à sa droite. De même, le port N-1 peut utiliser tout ou partie des tampons du port N immédiatement à sa droite. La figure 5 illustre un exemple de partage de la mémoire 26 en quatre tampons 60, 61, 62 et 63 en utilisant un bus trois états. La figure 6 illustre un autre exemple de partage de la mémoire 26 en quatre tampons 60, 61, 62 et 63, mais en utilisant cette fois un multiplexage des sorties.

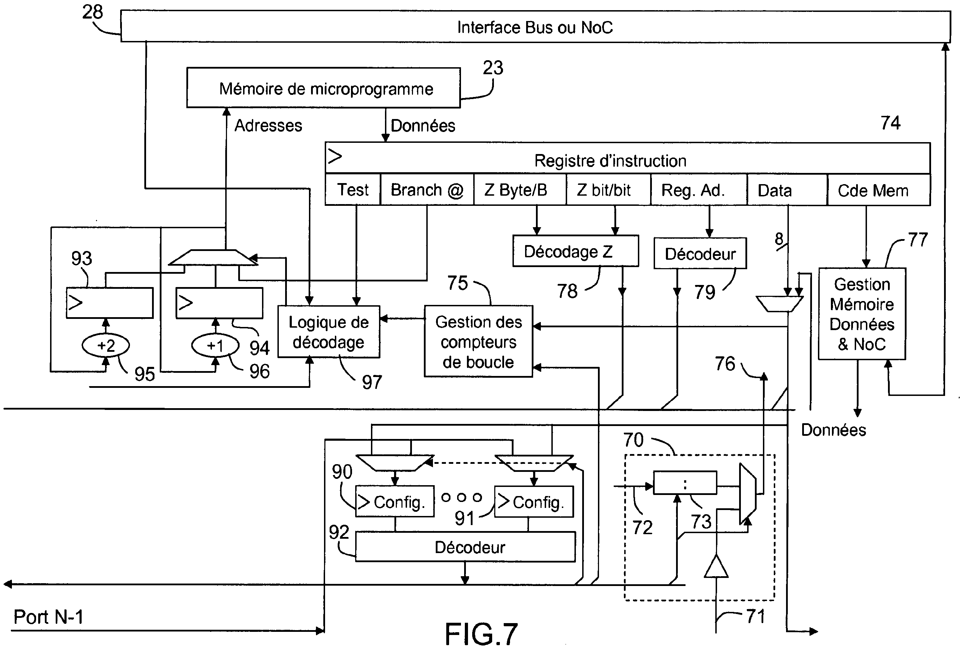

La figure 7 illustre un exemple de mise en oeuvre du contrôleur 24. C'est en quelque sorte le coeur du périphérique d'entrée/sortie. A chacun de ses cycles d'horloge, le contrôleur 24 doit déterminer en une seule instruction, parmi les broches 25, quelles broches sont en mode entrée et quelles broches sont en mode sortie. Ceci est fait en décrivant si les drivers sont en haute impédance ou non. A chacun de ses cycles d'horloge, le contrôleur 24 doit aussi déterminer en une seule instruction quelle valeur doit être affectée à chaque broche en mode sortie parmi les broches 25. Ce peut être une valeur venant de la mémoire de données 26, donc issue du processeur 20. Ce peut également être une valeur décidée par le contrôleur 24 lui-même, comme un signal de validation des données par exemple. A chacun de ses cycles d'horloge, le contrôleur 24 doit aussi déterminer en une seule instruction, parmi les valeurs échantillonnées sur les broches 25 en entrée, quelles sont celles à transmettre au processeur 20 via la mémoire 26. A chacun de ses cycles d'horloge, le contrôleur 24 doit enfin déterminer en une seule instruction quel(s) signal(aux) attendre avant de continuer l'envoi ou la réception de données via les broches 25.

Avantageusement, une même horloge 70 peut être utilisée par l'ensemble des éléments du périphérique d'entrée/sortie, à l'exception de l'interface 28 qui doit travailler à la fréquence du bus 27. Suivant le programme du contrôleur 24, le cadencement fourni par l'horloge 70 peut avoir deux origines possibles. Son origine peut être externe, le cadencement pouvant venir directement d'une broche de connexion 71. Alternativement, son origine peut être interne, l'horloge du système pouvant être reçue par l'horloge 70 via une entrée 72. Dans ce dernier cas, un diviseur de fréquence 73 peut permettre d'adresser des interfaces plus lentes que l'horloge du système. Avantageusement là encore, la valeur du diviseur 73 peut être programmée par le contrôleur 24. Mais afin d'adresser des interfaces plus rapides que l'horloge du système, le diviseur 73 peut aussi être remplacé par un multiplieur de fréquence, par exemple utilisant un mécanisme du type boucle à verrouillage de phase ou « Phase-Locked Loop » selon la terminologie anglo-saxonne. L'horloge 70 fournit le cadencement sur une sortie 76. Avantageusement là encore, le mode dans lequel fonctionne l'horloge 70, à savoir à cadencement interne ou externe, peut également être sélectionné par le contrôleur 24 grâce à la programmation d'un registre de configuration. Lorsque l'horloge 70 fonctionne en mode de cadencement interne, le cadencement peut également être appliqué sur une broche de sortie non représentée sur la figure 7.

Le contrôleur 24 exécute des instructions venant de la mémoire de microprogramme 23 qu'il peut charger par exemple dans un registre d'instruction 74. Une instruction est composée de plusieurs champs distincts, l'un des champs permettant de déterminer l'adresse de l'instruction suivante. A l'initialisation du système, le programme est chargé dans la mémoire de microprogramme 23 via l'interface 28. Mais avantageusement, il peut également être envisagé de recharger le programme en cours de fonctionnement, par exemple dans le cas de branchement d'un périphérique externe utilisant une nouvelle interface. Ainsi, le microprogramme exécuté par la machine 21 peut être modifié dynamiquement pendant l'utilisation du circuit. De nombreuses possibilités existent pour définir précisément la structure d'un mot d'instruction ainsi que le jeu d'instructions. Le registre d'instruction 74 illustre un exemple de structure de mot d'instruction. La longueur des champs n'est donnée qu'à titre indicatif. Dans le mode de réalisation de la figure 7, un champ « Test » à 6 bits indique si le programme doit continuer à l'adresse suivante ou sauter à l'adresse suivant l'adresse suivante ou sauter à l'adresse indiquée par exemple dans un champ « Branch @ » donnant l'adresse de branchement et qui sera décrit par la suite. Le champ « Test » indique également sous quelles conditions le saut doit avoir lieu. Par exemple, ça peut être sans condition ou sur débordement d'un compteur de boucle décrit par la suite ou sur réception d'un message de l'interface 28 ou encore sur détection d'un pattern par le module 44. Le champ « Branch @ » à 8 bits indique donc une adresse de branchement, ses 8 bits permettant ainsi d'adresser jusqu'à 256 instructions dans la mémoire de programme 23. Un champ « Z Byte/B » à 8 bits indique les octets en haute impédance. Un champ « Z bit/bit » à 8 bits indique, pour l'octet dont l'état est géré bit par bit, les bits en haute impédance. Un module 78 permet de décoder les champs « Z Byte/B » et « Z bit/bit ». Un champ « Reg. Ad. » à 8 bits indique le registre à charger et indique si la valeur à charger vient d'un champ « Data » qui sera décrit par la suite ou de la mémoire de données 26. Si la valeur vient de la mémoire 26, le champ « Reg. Ad. » indique également de quel octet. Ceci permet de charger des valeurs fixes ou paramétrables depuis le processeur 20. Un module 79 permet de décoder le champ « Reg. Ad. ». Le champ « Data » à 8 bits indique donc la valeur à charger dans le registre indiqué par le champ « Reg. Ad. ». Il peut s'agir par exemple d'une valeur des broches de sortie parmi les broches 25 ou de patterns à détecter avec le module 44 ou encore d'une valeur initiale ou modulo des compteurs de boucle. Un champ « Cde Mem » à 2 bits indique si un accès à la mémoire de données 26 doit se faire, et si c'est le cas, en lecture ou en écriture. Dans le présent exemple, chaque instruction fait donc au total 48 bits.

Le contrôleur 24 peut manipuler des adresses de microprogramme grâce à des registres d'adresse 93 et 94, grâce à des incrémenteurs 95 et 96 qui opèrent sur les registres 93 et 94 respectivement et grâce à un module de décodage 97.

Par exemple, le jeu d'instructions permet de commander directement l'état haute-impédance des drivers ainsi que l'état de huit des broches de sortie parmi les broches 25 dans le cas de signaux de validation ou de codes de synchronisation. Le jeu d'instructions permet également de charger les registres de configuration pour le partage des broches 25, pour le partage des tampons de mémoires 60, 61, 62 et 63 ou encore pour ajuster la fréquence de l'horloge 70. Il permet aussi de charger les patterns à comparer grâce au module 44, de commander la lecture ou l'écriture de mots dans la mémoire de données 26, d'envoyer des signaux de synchronisation à l'interface 28 pour acquitter les données reçues, de signaler des données prêtes à la lecture. Un module 77 permet par ailleurs de gérer les échanges entre la mémoire de données 26 et l'interface 28 avec le bus ou le NoC système. Le jeu d'instructions permet encore de gérer les différentes conditions de branchement de programmes. La plupart de ces opérations peuvent être faites simultanément, en associant une opération à un champ dans une instruction, de manière à ne pas imposer de retard dans la transmission des données. Il s'agit là encore d'un avantage majeur de l'invention, les solutions connues nécessitant quant à elles plusieurs cycles d'horloge pour exécuter des opérations d'entrée-sortie.

Dans le mode de réalisation de la figure 7, le contrôleur 24 comporte par exemple un module 75 permettant de gérer deux compteurs de boucles. Le contrôleur 24 peut initialiser la valeur de ces compteurs ainsi que leur modulo de la même manière qu'il peut y charger n'importe quel registre du système. La valeur de ces compteurs progresse par incrément à chaque cycle et un signal est fourni lors de leur passage à 0 ou à leur valeur maximum. Ces signaux, ainsi que ceux fournis par le module 44 de détection de patterns, permettent de décider de l'adresse de l'instruction suivante.

Comme déjà énoncé précédemment, le contrôleur 24 comporte également des registres de configuration, dont les registres 90 et 91. Un module 92 permet de décoder le contenu des registres de configuration.

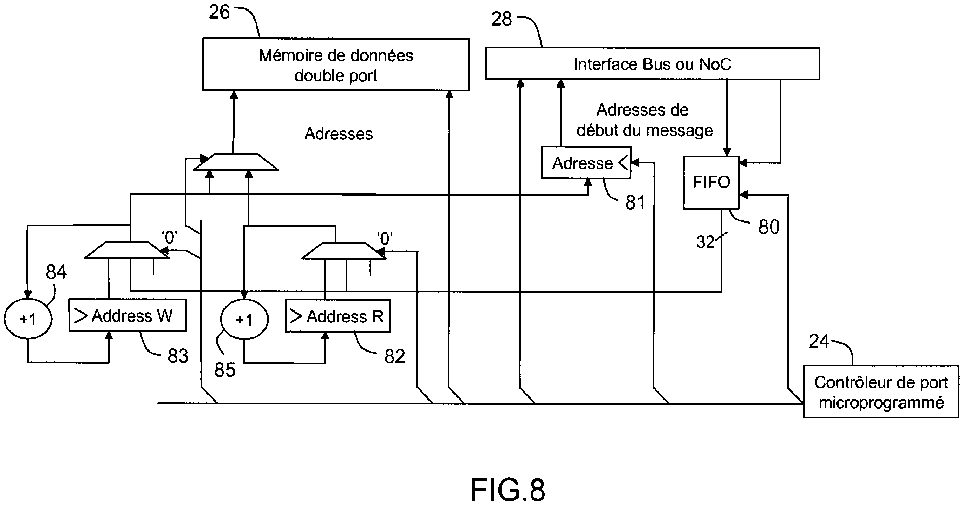

La figure 8 illustre un exemple d'architecture permettant de mettre en oeuvre le module 77. L'interface 28 prévient de l'arrivée d'un bloc de données à transmettre en écrivant l'adresse de début du bloc de données dans une structure FIFO 80, selon l'expression anglo-saxonne « First In First Out ». L'interface 28 envoie également un signal qui peut être testé par le contrôleur 24 au moyen de son jeu d'instructions. Le contrôleur 24 peut gérer deux adresses en mémoire de données 26, une adresse « R » dans un registre 82 pour les lectures et une adresse « W » dans un registre 83 pour les écritures. Lorsque le contrôleur 24 accède à la mémoire 26, que ce soit en lecture ou en écriture, il peut effectuer cet accès soit à une adresse initiale ('0' par exemple), soit à la première adresse disponible dans la FIFO 80, soit à l'adresse suivant celle utilisée lors du dernier accès dans la même direction (lecture ou écriture). Des incrémenteurs 84 et 85 opèrent sur les registres 82 et 83 avec un modulo contrôlé par un champ des registres de configuration chargés dans le contrôleur 24. Par exemple, lorsqu'il a fini d'écrire un bloc de données dans la mémoire 26, le contrôleur 24 peut envoyer à l'interface 28 l'adresse de début du message, chargée préalablement à l'écriture des données dans un registre ad-hoc 81, ainsi qu'un signal de validation.

L'invention décrite précédemment présente notamment l'avantage de permettre aux circuits l'implémentant de s'adapter à un très grand nombre de protocoles d'entrée/sortie. De plus, elle permet d'offrir une grande souplesse dans le choix de l'emplacement des broches de connection avec les différents périphériques extérieurs, en fonction par exemple des contraintes de routage des communications interne au circuit entre le périphérique interne et les processeurs de traitement, ou bien des contraintes de routage sur le circuit imprimé entre le circuit et ses périphériques externes. En effet, les périphériques internes selon l'invention étant tous identiques, il suffit de programmer pour tel ou tel protocole le périphérique gérant les broches situées à l'emplacement désiré.

## Revendications

1. Circuit comportant au moins un processeur (20), **caractérisé en ce qu'**il comporte une machine microprogrammée (21) pour traiter des données qui entrent ou qui sortent du processeur afin de les faire entrer ou sortir du circuit par des broches de connexion en respectant un protocole de communication, chaque broche permettant l'entrée ou la sortie d'un bit d'information, la machine microprogrammée déterminant à chacun de ses cycles d'horloge et en une seule instruction :
- quelles broches sont en mode entrée et quelles broches sont en mode sortie, et/ou ;
- quelle valeur affecter à chaque broche, et/ou ;
- quelles valeurs transmettre au processeur, et/ou ;
- quels signaux attendre avant de continuer l'envoi ou la réception de données.

2. Circuit selon la revendication 1, **caractérisé en ce qu'**une instruction de la machine microprogrammée comporte :
- un champ permettant de déterminer quelles broches sont en mode entrée et quelles broches sont en mode sortie, et/ou ;
- au moins un champ permettant de déterminer quelle valeur affecter à chaque broche en mode sortie, et/ou ;
- un champ permettant de déterminer quelles valeurs transmettre au processeur, et/ou ;
- un champ permettant de déterminer quels signaux attendre avant de continuer l'envoi ou la réception de données ;
de telle sorte que le mode entrée/sortie de chaque broche, la valeur à affecter à chaque broche, les valeurs à transmettre au processeur ainsi que les signaux à attendre sont déterminés en un cycle d'horloge.

3. Circuit selon la revendication 1, **caractérisé en ce que** la machine microprogrammée comporte un registre d'instruction (74) et une mémoire de microprogramme (23) contenant des instructions formant un microprogrammme, le registre étant chargé avec des instructions du microprogramme, les instructions permettant de traiter les données qui entrent ou qui sortent du processeur (20) afin de les faire entrer ou sortir du circuit en respectant le protocole de communication, les instructions étant modifiables dans la mémoire de microprogramme de sorte que le circuit est adaptable à n'importe quel protocole de communication.

4. Circuit selon la revendication 3, **caractérisé en ce que** chaque instruction comporte au moins un champ (Branch @) permettant de déduire l'adresse de l'instruction suivante à exécuter dans la mémoire de microprogramme (23).

5. Circuit selon la revendication 1, **caractérisé en ce qu'**il comporte un module d'interface réseau (28) entre la machine microprogrammée (21) et un réseau de communication (27) utilisé par le processeur (20).

6. Circuit selon la revendication 1, **caractérisé en ce que** le processeur (20) et la machine microprogrammée (21) échangent les données par écriture puis lecture dans une mémoire (26), la mémoire ne contenant que temporairement les données.

7. Circuit selon la revendication 1, **caractérisé en ce qu'**un jeu donné de broches adjacentes (25) forme un port d'entrée/sortie utilisable par la machine microprogrammée (21) pour faire entrer dans le circuit les données à destination du processeur (20) ou pour faire sortir du circuit les données en provenance du processeur, en respectant le protocole de communication.

8. Circuit selon les revendications 3, 6 et 7, chaque broche de connexion étant connectée à un amplificateur permettant d'émettre ou de recevoir un signal sur la broche, **caractérisé en ce qu'**il comporte un module d'interface broches (31) entre la mémoire (26) et les amplificateurs, les instructions formant le microprogramme contrôlant le transfert des données entre la mémoire (26) et les amplificateurs à travers le module d'interface broches (31).

9. Circuit selon les revendications 6 et 7, **caractérisé en ce qu'**il comporte un module (42, 43) permettant de convertir des mots au format de la mémoire (26) en des mots à un format adapté au nombre de broches (25) disponibles pour faire entrer ou sortir les données du circuit en respectant le protocole de communication.

10. Circuit selon les revendications 3 et 9, **caractérisé en ce que** le format adapté au nombre de broches (25) disponibles pour faire entrer ou sortir les données du circuit est déterminé par les instructions formant le microprogramme.

11. Circuit selon la revendication 9, **caractérisé en ce que** des données parallèles sur 32 bits sont converties en des données parallèles sur 16, 8, 4 ou 2 bits et inversement.

12. Circuit selon la revendication 9, **caractérisé en ce que** des données parallèles sur 32 bits sont converties en des données série et inversement.

13. Circuit selon la revendication 1, **caractérisé en ce qu'**il comporte au moins deux machines microprogrammées pour traiter des données qui entrent ou qui sortent du processeur (20) afin de les faire entrer ou sortir du circuit en respectant des protocoles de communication.

14. Circuit selon les revendications 7 et 13, **caractérisé en ce que**, deux jeux adjacents de broches étant respectivement utilisables par deux machines, le circuit comporte un module de décalage (45, 46) permettant qu'une première machine utilise, en plus de son propre jeu de broches (25), des broches dans le jeu adjacent (57) de la deuxième machine.

15. Circuit selon les revendications 3 et 14, **caractérisé en ce que** les instructions formant le microprogramme permettent de contrôler le module de décalage (45, 46).

16. Circuit selon la revendication 14, **caractérisé en ce qu'**il comporte un module de décalage (55, 56) permettant que la deuxième machine utilise à son tour des broches dans un jeu adjacent de broches d'une troisième machine microprogrammée.

17. Circuit selon la revendication 6, 7 et 13, **caractérisé en ce que**, deux espaces dans la mémoire (26) étant respectivement utilisables par deux machines utilisant des ports adjacents, les deux espaces étant divisés en plusieurs tampons de mémoire, une première machine utilise, en plus de ses propres tampons de mémoire (60, 61, 62, 63) et proportionnellement au volume de données qu'elle traite, des tampons de mémoire de la deuxième machine.

18. Circuit selon la revendication 17, **caractérisé en ce que** la deuxième machine utilise à son tour, proportionnellement au volume de données qu'elle traite, des tampons de mémoire d'une troisième machine microprogrammée utilisant un port adjacent au sien.

19. Circuit selon la revendication 1, la machine microprogrammée (21) comportant une horloge (70) pour cadencer ses cycles de traitement, **caractérisé en ce que** l'horloge (70) fournit une fréquence de travail provenant d'un périphérique externe.

20. Circuit selon la revendication 1, la machine microprogrammée (21) comportant une horloge (70) pour cadencer ses cycles de traitement, **caractérisé en ce que** l'horloge (70) fournit une fréquence de travail obtenue par multiplication ou division de la fréquence de travail du processeur (20).

21. Circuit selon les revendications 3, 19 et 20, **caractérisé en ce que** les instructions formant le microprogramme permettent de sélectionner :
- une fréquence de travail fournie par un périphérique externe ; ou
- une fréquence de travail obtenue par multiplication ou division de la fréquence de travail du processeur (20) par un coefficient ajustable.

22. Circuit selon la revendication 1, **caractérisé en ce qu'**il comporte un module (44) de reconnaissance des données de contrôle du protocole de communication, les données de contrôle à reconnaître étant fournies par la machine microprogrammée (21).

23. Circuit selon la revendication 1, **caractérisé en ce que** la machine microprogrammée (21) comporte un module (75) de comptage de boucles.

## Claims

1. Circuit comprising at least one processor (20), **characterised in that** it comprises a microprogrammed machine (21) for processing data which enter or leave the processor in order to cause them to enter or leave the circuit via connection pins in accordance with a communication protocol, each pin allowing an information bit to enter or leave, the microprogrammed machine determining at each of its clock cycles and in a single instruction:
- which pins are in input mode and which pins are in output mode, and/or;
- which value to assign to each pin, and/or;
- which values to transmit to the processor, and/or;
- which signals to await before continuing to send or receive data.

2. Circuit according to claim 1, **characterised in that** an instruction of the microprogrammed machine comprises:
- a field which allows determination of which pins are in input mode and which pins are in output mode, and/or;
- at least one field which allows determination of which value to assign to each pin in output mode, and/or;
- a field which allows determination of which values to transmit to the processor, and/or;
- a field which allows determination of which signals to await before continuing to send or receive data;
so that the input/output mode of each pin, the value to be allocated to each pin, the values to be transmitted to the processor and the signals to be awaited are determined in one clock cycle.

3. Circuit according to claim 1, **characterised in that** the microprogrammed machine comprises an instruction register (74) and a microprogramme memory (23) which contains instructions which form a microprogramme, the register being loaded with instructions of the microprogramme, the instructions allowing the data which enter or leave the processor (20) to be processed in order to cause them to enter or leave the circuit in accordance with the communication protocol, the instructions being able to be modified in the microprogramme memory so that the circuit can be adapted to any communication protocol.

4. Circuit according to claim 3, **characterised in that** each instruction comprises at least one field (Branch @) which allows the address to be derived for the following instruction to be carried out in the microprogramme memory (23).

5. Circuit according to claim 1, **characterised in that** it comprises a network interface module (28) between the microprogrammed machine (21) and a communication network (27) used by the processor (20).

6. Circuit according to claim 1, **characterised in that** the processor (20) and the microprogrammed machine (21) exchange the data by means of writing to then reading from a memory (26), the memory only temporarily containing the data.

7. Circuit according to claim 1, **characterised in that** a specific set of adjacent pins (25) forms an input/output port which can be used by the microprogrammed machine (21) in order to enter into the circuit the data which are intended for the processor (20), or to cause the data from the processor to leave the circuit in accordance with the communication protocol.

8. Circuit according to claims 3, 6 and 7, each connection pin being connected to an amplifier which allows a signal to be transmitted or received at the pin, **characterised in that** it comprises a pin interface module (31) between the memory (26) and the amplifiers, the instructions which form the microprogramme controlling the transfer of data between the memory (26) and the amplifiers via the pin interface module (31).

9. Circuit according to claim 6 and 7, **characterised in that** it comprises a module (42, 43) which allows words in the format of the memory (26) to be converted into words in a format which is adapted to the number of pins (25) available in order to cause the data to enter or leave the circuit in accordance with the communication protocol.

10. Circuit according to claims 3 and 9, **characterised in that** the format which is adapted to the number of pins (25) available for causing the data to enter or leave the circuit is determined by the instructions which form the microprogramme.

11. Circuit according to claim 9, **characterised in that** 32 bit parallel data are converted into 16, 8, 4 or 2 bit parallel data and vice versa.

12. Circuit according to claim 9, **characterised in that** 32 bit parallel data are converted into serial data and vice versa.

13. Circuit according to claim 1, **characterised in that** it comprises at least two microprogrammed machines in order to process data which enter or which leave the processor (20) in order to cause them to enter or leave the circuit in accordance with the communication protocols.

14. Circuit according to claims 7 and 13, **characterised in that** since two adjacent sets of pins can be used by two machines, respectively, the circuit comprises a shift module (45, 46) which allows a first machine to use, in addition to its own set of pins (25), pins in the adjacent set (57) of the second machine.

15. Circuit according to claims 3 and 14, **characterised in that** the instructions which form the microprogramme allow the shift module (45, 46) to be controlled.

16. Circuit according to claim 14, **characterised in that** it comprises a shift module (55, 56) which allows the second machine to use in turn pins in an adjacent set of pins of a third microprogrammed machine.

17. Circuit according to claim 6, 7 and 13, **characterised in that**, since two spaces in the memory (26) can be used by two machines using adjacent ports, respectively, the two spaces being divided into a plurality of memory buffers, a first machine uses, in addition to its own memory buffers (60, 61, 62, 63) and in proportion to the volume of data which it processes, memory buffers of the second machine.

18. Circuit according to claim 17, **characterised in that** the second machine in turn uses, in proportion to the volume of data which it processes, memory buffers of a third microprogrammed machine which uses a port adjacent to its own.

19. Circuit according to claim 1, the microprogrammed machine (21) comprising a clock (70) in order to provide rhythm for its processing cycles, **characterised in that** the clock (70) provides an operating frequency which originates from an external peripheral device.

20. Circuit according to claim 1, the microprogrammed machine (21) comprising a clock (70) in order to provide rhythm for its processing cycles, **characterised in that** the clock (70) provides an operating frequency which is obtained by means of multiplication or division of the operating frequency of the processor (20).

21. Circuit according to claims 3, 19 and 20, **characterised in that** the instructions which form the microprogramme allow the selection of:
- an operating frequency which is provided by an external peripheral device; or
- an operating frequency which is obtained by means of multiplication or division of the operating frequency of the processor (20) by an adjustable coefficient.

22. Circuit according to claim 1, **characterised in that** it comprises a recognition module (44) for the control data of the communication protocol, the control data to be recognised being provided by the microprogrammed machine (21).

23. Circuit according to claim 1, **characterised in that** the microprogrammed machine (21) comprises a loop counting module (75).

## Patentansprüche

1. Schaltung mit wenigstens einem Prozessor (20), **dadurch gekennzeichnet, dass** sie eine mikroprogrammierte Maschine (21) zum Verarbeiten von in den Prozessor eingegebenen oder von diesem ausgegebenen Daten umfasst, um sie gemäß einem Kommunikationsprotokoll über Anschlussstifte in die Schaltung ein- oder aus dieser auszugeben, wobei jeder Stift die Ein- oder Ausgabe eines Informationsbits zulässt, wobei die mikroprogrammierte Maschine bei jedem ihrer Taktzyklen und in einem einzigen Befehl Folgendes ermittelt:
- welche Stifte im Eingabemodus und welche Stifte im Ausgabemodus sind, und/oder
- welcher Wert jedem Stift zuzuordnen ist, und/oder
- welche Werte zum Prozessor zu übertragen sind, und/oder
- auf welche Signale vor dem Fortsetzen des Sendens oder Empfangens von Daten zu warten ist.

2. Schaltung nach Anspruch 1, **dadurch gekennzeichnet, dass** ein Befehl der mikroprogrammierten Maschine Folgendes beinhaltet:
- ein Feld, um zu ermitteln, welche Stifte im Eingabemodus und welche Stifte im Ausgabemodus sind, und/oder
- wenigstens ein Feld, um zu ermitteln, welcher Wert jedem Stift im Ausgabemodus zuzuordnen ist, und/oder
- ein Feld, um zu ermitteln, welche Werte zum Prozessor zu übertragen sind, und/oder
- ein Feld, um zu ermitteln, auf welche Signale vor dem Fortsetzen des Sendens oder Empfangens von Daten zu warten ist;
auf eine solche Weise, dass der Ein-/Ausgabemodus jedes Stifts, der jedem Stift zuzuordnende Wert, die zum Prozessor zu übertragenden Werte sowie die abzuwartenden Signale in einem Taktzyklus ermittelt werden.

3. Schaltung nach Anspruch 1, **dadurch gekennzeichnet, dass** die mikroprogrammierte Maschine ein Befehlsregister (74) und einen Mikroprogrammspeicher (23) umfasst, der ein Mikroprogramm bildende Befehle enthält, wobei das Register mit den Befehlen des Mikroprogramms geladen wird, wobei es die Befehle ermöglichen, die in den Prozessor (20) eingegebenen oder daraus ausgegebenen Daten zu verarbeiten, um sie gemäß dem Kommunikationsprotokoll in die Schaltung ein-oder daraus auszugeben, wobei die Befehle im Mikroprogrammspeicher so modifiziert werden können, dass die Schaltung an jedes beliebige Kommunikationsprotokoll angepasst werden kann.

4. Schaltung nach Anspruch 3, **dadurch gekennzeichnet, dass** jeder Befehl wenigstens ein Feld (Branch @) umfasst, mit dem die Adresse des nachfolgenden auszuführenden Befehls im Mikroprogrammspeicher (23) abgeleitet werden kann.

5. Schaltung nach Anspruch 1, **dadurch gekennzeichnet, dass** sie ein Netzschnittstellenmodul (28) zwischen der mikroprogrammierten Maschine (21) und einem vom Prozessor (20) benutzten Kommunikationsnetz (27) umfasst.

6. Schaltung nach Anspruch 1, **dadurch gekennzeichnet, dass** der Prozessor (20) und die mikroprogrammierte Maschine (21) Daten durch Schreiben, dann Lesen in einen/m Speicher (26) austauschen, wobei der Speicher die Daten nur vorübergehend aufnimmt.

7. Schaltung nach Anspruch 1, **dadurch gekennzeichnet, dass** ein bestimmter Satz von benachbarten Stiften (25) einen Ein-/Ausgabeport bildet, der von der mikroprogrammierten Maschine (21) zum Eingeben der für den Prozessor (20) bestimmten Daten in die Schaltung oder zum Ausgeben der vom Prozessor kommenden Daten aus der Schaltung gemäß dem Kommunikationsprotokoll benutzt werden kann.

8. Schaltung nach den Ansprüchen 3, 6 und 7, wobei jeder Anschlussstift mit einem Verstärker verbunden ist, der das Senden oder Empfangen eines Signals an dem Stift zulässt, **dadurch gekennzeichnet, dass** sie ein Stiftschnittstellenmodul (31) zwischen dem Speicher (26) und den Verstärkern umfasst, wobei die das Mikroprogramm bildenden Befehle die Übertragung der Daten zwischen dem Speicher (26) und den Verstärkern durch das Stiftschnittstellenmodul (31) steuern.

9. Schaltung nach den Ansprüchen 6 und 7, **dadurch gekennzeichnet, dass** sie ein Modul (42, 43) umfasst, mit dem Wörter im Format des Speichers (26) in Wörter eines Formats konvertiert werden können, das an die Zahl von Stiften (25) angepasst ist, die zum Eingeben oder Ausgeben von Daten in die/aus der Schaltung gemäß dem Kommunikationsprotokoll zur Verfügung stehen.

10. Schaltung nach den Ansprüchen 3 und 9, **dadurch gekennzeichnet, dass** das Format, das an die Zahl von Stiften (25) angepasst ist, die zum Eingeben oder Ausgeben von Daten in die/aus der Schaltung zur Verfügung stehen, durch die das Mikroprogramm bildenden Befehle bestimmt wird.

11. Schaltung nach Anspruch 9, **dadurch gekennzeichnet, dass** parallele 32 Bit Daten in parallele 16, 8, 4 oder 2 Bit Daten und umgekehrt konvertiert werden.

12. Vorrichtung nach Anspruch 9, **dadurch gekennzeichnet, dass** parallele 32 Bit Daten in serielle Daten konvertiert werden und umgekehrt.

13. Vorrichtung nach Anspruch 1, **dadurch gekennzeichnet, dass** sie wenigstens zwei mikroprogrammierte Maschinen zum Verarbeiten von Daten umfasst, die in den Prozessor (20) eingegeben oder aus diesem ausgegeben werden, um sie gemäß Kommunikationsprotokollen in die Schaltung ein- oder aus dieser auszugeben.

14. Schaltung nach den Ansprüchen 7 und 13, **dadurch gekennzeichnet, dass** zwei benachbarte Sätze von Stiften jeweils von zwei Maschinen benutzt werden können, wobei die Schaltung ein Versatzmodul (45, 46) umfasst, so dass nur eine erste Maschine über ihren eigenen Satz von Stiften (25) hinaus Stifte im Nachbarsatz (57) der zweiten Maschine benutzt.

15. Schaltung nach den Ansprüchen 3 und 14, **dadurch gekennzeichnet, dass** die das Mikroprogramm bildenden Befehle die Steuerung des Versatzmoduls (45, 46) zulassen.

16. Vorrichtung nach Anspruch 14, **dadurch gekennzeichnet, dass** sie ein Versatzmodul (55, 56) umfasst, das es zulässt, dass die zweite Maschine wiederum die Stifte in einem Nachbarsatz von Stiften einer dritten mikroprogrammierten Maschine benutzt.

17. Schaltung nach Anspruch 6, 7 und 13, **dadurch gekennzeichnet, dass** zwei Räume im Speicher (26) jeweils von zwei Maschinen benutzt werden können, die benachbarte Ports benutzen, wobei die beiden Räume in mehrere Pufferspeicher unterteilt sind, wobei eine erste Maschine über ihre eigenen Pufferspeicher (60, 61, 62, 63) hinaus und proportional zu dem von ihr verarbeiteten Datenvolumen Pufferspeicher der zweiten Maschine benutzt.

18. Schaltung nach Anspruch 17, **dadurch gekennzeichnet, dass** die zweite Maschine wiederum proportional zu dem von ihr verarbeiteten Datenvolumen Pufferspeicher einer dritten mikroprogrammierten Maschine benutzt, die einen Nachbarport zu ihrem eigenen benutzt.

19. Schaltung nach Anspruch 1, wobei die mikroprogrammierte Maschine (21) einen Taktgeber (70) zum Takten ihrer Verarbeitungszyklen umfasst, **dadurch gekennzeichnet, dass** der Taktgeber (70) eine von einem äußeren Peripheriegerät kommende Arbeitsfrequenz liefert.

20. Schaltung nach Anspruch 1, wobei die mikroprogrammierte Maschine (21) einen Taktgeber (70) zum Takten ihrer Verarbeitungszyklen umfasst, **dadurch gekennzeichnet, dass** der Taktgeber (70) eine durch Multiplizieren oder Dividieren der Arbeitsfrequenz des Prozessors (20) erhaltene Arbeitsfrequenz liefert.

21. Schaltung nach den Ansprüchen 3, 19 und 20, **dadurch gekennzeichnet, dass** die das Mikroprogramm bildenden Befehle es zulassen, Folgendes zu wählen:
- eine von einem externen Peripheriegerät gelieferte Arbeitsfrequenz; oder
- eine Arbeitsfrequenz, die durch Multiplizieren oder Dividieren der Arbeitsfrequenz des Prozessors (20) mit/durch einem/n einstellbaren Koeffizienten erhalten wird.

22. Schaltung nach Anspruch 1, **dadurch gekennzeichnet, dass** sie ein Modul (44) zum Erkennen von Steuerdaten des Kommunikationsprotokolls umfasst, wobei die Erkennungssteuerdaten von der mikroprogrammierten Maschine (21) geliefert werden.

23. Schaltung nach Anspruch 1, **dadurch gekennzeichnet, dass** die mikroprogrammierte Maschine (21) ein Modul (75) zum Zählen von Schleifen umfasst.
